# EUROPEAN PATENT SPECIFICATION

(11) **EP 0 491 946 B1**
(45) Date of publication and mention of the grant of the patent: **03.06.1998**
(21) Application number: 90910949.8
(22) Date of filing: 11.07.1990
(51) Int. Cl.: C04B 20/02, C04B 20/10, C04B 22/06, C04B 22/02, C04B 41/61, C09C 3/06

(54) **MINERAL SUBSTANCE PREVENTED FROM UNDERGOING BASIC REACTION AND METHOD OF PREVENTING SAID REACTION**
ANORGANISCHE SUBSTANZ MIT VERHINDERTER BASISCHER REAKTION UND VERFAHREN ZUR VERHINDERUNG DIESER REAKTION
SUBSTANCE MINERALE RENDUE INAPTE A SUBIR UNE REACTION BASIQUE, ET PROCEDE D'EMPECHEMENT D'UNE TELLE REACTION

(43) Date of publication of application: 01.07.1992
(73) Proprietor: INAX CORPORATION, Tokoname-shi Aichi (JP)
(72) Inventor: TSUYUKI, Naomitsu, 20-35, Kanesugi 6-chome, Chiba 273 (JP); OGASAWARA, Naochito, 1-33, Babahonmachi, Fukushima 965 (JP); GOTO, Kazumasa, Inax Corporation,, Aichi 479 (JP); HIBINO, Takeshi, Inax Corporation, Aichi 479 (JP)
(74) Representative: VOSSIUS & PARTNER
(86) International application number: JP9000895
(87) International publication number: WO9200938

(56) References cited:
- JP-A- 2 184 549
- JP-A- 5 218 726
- JP-A- 5 747 783
- JP-A-62 260 753
- JP-B- 0 556 600
- JP-C- 0 138 076
- US-A- 2 919 997
- DATABASE WPI Section Ch, Week 7520, 12 October 1972 Derwent Publications Ltd., London, GB; Class L02, AN 75-33845W

## Description

This invention relates to a mineral substance such as aggregates for cement concrete and silicate ceramic products, substantially prevented from a reaction with a basic component, as well as to a method for inhibiting a base-silica reaction with a mineral substance reactive with a basic component. The present invention is very useful, for example, for increasing durability of and preventing surface contamination on cement concrete products and silicate ceramic articles.

Reaction of mineral aggregate for cement concrete with a basic component has been large problems with respect to the durability of cement concrete structures. The lifetime of such cement concrete was sometimes less than 20 years. As the main reasons for such short lifetime, it is considered in the art that a reactive silica mineral contained in the aggregate reacts with a basic component (typically an alkali metal component) contained in the cement to produce alkali/silica-based gels, and the resulting gels absorb water and undergo expansion and separation to generate cracks, fracture, contamination and the like in the concrete products. In order to control such alkali-aggregate reactions, there has been tried a method of decreasing the content of alkali metal components in the cement material or a method of incorporating granulated blastfurnace slag, fly ash or the like into the cement concrete material to catch the alkali component or to dilute the alkali metal content. The above-mentioned methods, however, failed to essentially inhibit the reaction of aggregates with alkali components for a long time. The alkali-aggregate reaction often took place in one month or in a few years.

Ceramic products having the base-silica reactivity are represented by silicate ceramics, and form the silica component reactive with the alkali component during fire-sintering of the ceramics. The reactive ceramics react with alkali components, which are for example alkali components contained in sea water or alkali components contained in cement mortar for bonding ceramic articles; and thus produce alkali-silica reaction products. The resulting reaction products undergo expansion to generate cracks and fracture, and undergo surface-separation to generate surface contamination. In order to decrease such large problems, it has been proposed (a) to decrease the content of reactive silica components in raw materials or (b) to make ceramic products non-hygroscopic by means of high-temperature firing. The method (a) was difficult because of high cost and unstable quality of the raw material, and the method (b) was disadvantageous from the economical viewpoints of heat energy, kiln or furnace, and selected raw materials.

US-A-2,919,997 discloses in Example 2 a method which relates to the addition of aqueous 10% hydrogen peroxide solution to water used for mixing unhardened cement in a concrete mixer. The cement is indicated as aluminous cement, i.e. calcium aluminate cement.

SU-A-442171 discloses a treatment of ground alumina containing material, namely a slag, with H₂O₂ in order to prevent swelling of concrete by lowering the content of dispersed metal when using the treated substance as an aggregate. It is emphasized therein that H₂O₂ does not react with the aggregate but only oxidizes dispersed metal.

Thus, the means to eliminate the base-silica reactions of the reactive mineral substances has remained unsolved.

The main objects of the invention are to provide mineral substances substantially prevented from the above-mentioned basic reactions, as well as to provide methods for inhibiting the base-aggregate reactions in hydraulic cement compositions.

The present inventors have noted that reactivity of silicate substances with basic components (typically alkali components) is mainly caused by the silica components of the silicates (for example, by the reactivity due to radicals or ions of the silica components). The inventors have unexpectedly found that surface structures of the mineral substances to be in contact with the basic components are modified and stabilized for a prolonged time, by contacting the silicate substances with aqueous hydrogen peroxide solution (hereinafter sometimes referred to as H₂O₂ water) and/or ozone-containing water (hereinafter sometimes referred to as O₃ water).

In accordance with the present invention, pre-treated mineral substances according to Claim 1 substantially prevented from the reactions with basic components are provided, wherein a reaction site(s) of the mineral substance is modified by contacting the mineral substance reactive with basic components with hydrogen peroxide and/or ozone in the presence of water.

When the mineral substance is an aggregate for cement concrete, the methods for contacting H₂O₂ or O₃ with the aggregate particles are exemplified by a method of soaking the particles in aqueous H₂O₂ solution or ozone-containing water (O₃ water) or a method of spraying H₂O₂ water or O₃ water onto the particles. The aggregate treated in advance with H₂O₂ or O₃ can be mixed with other cement concrete materials, or aggregate not yet treated can be mixed with cement materials and then H₂O₂ water or O₃ water can be added or used when water is added to the inorganic cement concrete mixture.

Thus according to Claim 6 of the present invention, there is provided a method for inhibiting a reaction of aggregate with an alkali metal component in a hydraulic cement composition, wherein the aggregate for cement concrete to be used is a mineral aggregate reactive with basic components which was treated with hydrogen peroxide or ozone in the presence of water, in an amount of not less than 0.02% of hydrogen peroxide or ozone by weight of water, which composition is allowed to exist upon blending hydraulic cement, water and mineral aggregate reactive with basic components. When the inorganic cement is a cement material containing calcium aluminate (e.g. alumina cement), curing speed of the cement can also be retarded in addition to the inhibition of the base-silica reactions. This is useful for controlling and retarding the curing speed of calcium aluminate-containing cement, because it has a high hydration speed. There is thus provided a method for retarding the curing speed of hydraulic cement containing calcium aluminate by allowing hydrogen peroxide or ozone to exist in a blended cement mixture comprising the hydraulic cement and water. In this case, the action of hydrogen peroxide or ozone can be controlled by incorporating into the blended mixture a reducing agent substance in a smaller quantity than an equivalent amount of the hydrogen peroxide or ozone.

According to Claim 5 of the present invention, a ceramic product prevented from the base-silica reactions is further provided, wherein reaction sites of reactive silica components in mineral ceramic products are modified by permeating hydrogen peroxide water or ozone-containing water into water-absorbing mineral ceramic products containing silica components and/or silicate components reactive with basic components. The invention can also be advantageously applied to inhibition of the base-silica reactions in progress in the ceramic products. Thus, there is provided a method for inhibiting a base-silica reaction in a ceramic product containing a silica component and/or silicate component reactive with basic components, which comprises removing a base-silica reaction product exposed on the surfaces of the ceramic product and permeating hydrogen peroxide water and/or ozone-containing water into the exposed portions of the ceramic product.

### (1) Examples of aggregates for cement concrete, which are reactive mineral substances.

The reactive aggregates are exemplified by mineral rock aggregates containing reactive silica minerals such as opal, cristobalite, tridymite, volcanic glass and/or chalcedony. Volcanic rock aggregates are generally used and represented by pyroxene andesite aggregate. Coarse aggregate, fine aggregate and pulverized slag, which are derived from blastfurnace slag and normally from granulated blastfurnace slag, contain the above-mentioned components and are especially reactive when used in a small quantity. Crushed aggregates derived from waste silicate ceramics or waste glass are also reactive. Sea sand aggregate is also very reactive. These reactive aggregates can be used alone or in combination with other non-reactive aggregates.

### (2) Examples of ceramics, which are reactive mineral substances

The ceramic products the invention is advantageously applied to are exemplified by chinaware products, stoneware products and most porcelain products. The water absorbing ceramic products have a water absorption ratio (soaking in water for 24 hours) of about 0.2% or more, generally about 0.5% or more and typically about 1% or more. In the basic components of the ceramic products, alkali components thereof especially involve the base-silica reactions. The reactive silica components include silica minerals such as opal, cristobalite, tridymite, volcanic glass and chalcedony, as well as synthetic mineral materials having glass surface structures. In general, volcanic rock materials and glass powder contain such reactive silica components. Incidentally, silicate minerals and other inorganic raw materials often exhibit such alkali-silica reaction properties by firing treatment.

### (3) Hydrogen peroxide and ozone

As the H₂O₂ to be employed in the present invention, a dilute H₂O₂ solution can be advantageously used by diluting with water an aqueous H₂O₂ solution of 30 to 35% by weight which is commercially available at a low cost. The concentration of H₂O₂ water (% by weight) is generally about 0.02% or more in the range of about 0.02 to 35%, normally about 0.05 to 10%, and typically about 0.5 to 5%. Upon contacting an article with H₂O₂ water, the article can be soaked in H₂O₂ water (e.g. several tens minutes at a concentration of 0.5 to 2%), or can be sprayed with H₂O₂ water. When H₂O₂ water is added or used upon blending water into cement concrete matrials, a suitable concentration of H₂O₂ water is about 0.02 to 10 % and preferably about 0.05 to 5 %.

Ozone obtained from an ozone generator utilizing silent discharge or electrolysis can be advantageously used as ozone for the present invention. For example, ozone can be obtained at a low cost by silent-discharging an alternating current in oxygen or dry air. The concentration (% by weight) of O₃ water to be used (e.g. ozone-containing water such as an aqueous solution or supersaturated solution of ozone or ozone-containing steam) is generally about 0.02 % or more in the range of about 0.02 to 3 %, and normally about 0.05 to 2 %. A higher concentration can be used in the case of ozone-containing steam. Incidentally, the aqueous supersaturated ozone solution is obtained by introducing ozone or ozone-containing gas into water under pressure. The ozone-containing steam is obtained by mixing ozone or an ozone-containing gas with saturated steam, whereby an ozone concentration to water can be increased to a high concentration corresponding to those of the above-mentioned H₂O₂ water. The treatment for contacting O₃ water as well as the treatment for adding O₃ water or using O₃ water as water for blending cement materials can be conducted at the above-mentioned concentrations in the substantially same fashion as in H₂O₂ water. It is generally preferred to seal a vessel for the contacting treatment when an aqueous supersaturated solution of ozone or ozone-containing steam is used. It is also preferred to place mineral substances to be contact-treated in a sealed vessel, and then (a) to successively introduce thereinto ozone-containing steam or (b) to add water for soaking or moisturing the substances and successively introduce thereinto ozone or ozone-containing gas.

In these cases, it may be generally preferred to wash the treated mineral substances with water, but it is not always needed to wash with water. Incidentally, a small amount (e.g. a 2/3 equivalent amount or less with respect to an equivalent amount of H₂O₂ or O₃) of a reducing agent substance (e.g. a sulfite or nitrite) may be desirably used in the treatment system to moderate the action of H₂O₂ or O₃.

### (4) Hydraulic cement

The term "hydraulic cement" means inorganic binding powder which is hydrated and cured in the presence of water, and normally means inorganic powder containing calcium silicate and/or calcium aluminate. The cement includes, for example, portland cement, alumina cement, synthetic aluminate cement, blastfurnace cement, other mixes cement, and mixtures thereof.

When a cement material containing calcium aluminate is used, curing can be retarded as a second effect. The term "calcium aluminate" means a binary compound of CaO (referred to as C) and Al₂O₃ (referred to as A), and is typically represented by CA, C₃A, C₁₂A₇, C₁₁A₇CaX₂ (X is a halogen), CA₂, CA₆, etc. The hydraulic cement materials exhibitting the retarded curing includes, for example, alumina cement containing CA as the main component as well as portland cement containing 7% or more (preferably 10% or more) of C₃A component, modified portland cement comprising ordinary portland cement and calcium aluminate mixed therewith (e.g. jet cement containing C₁₁A₇CaX₂), synthetic calcium aluminate cement, and mixtures thereof. In this respect, this method can be especially effective to alumina cement and/or jet cement, or mixtures thereof with other hydraulic cement.

### (5) Examples and Comparative Examples

### Ex. 1 to 4

There was used aggregate consisting of 20% by weight of pyroxene andesite aggregate reactive in an alkali-silica reaction and 80% of river sand less reactive in the reaction. As the andesite aggregate, used were untreated aggregate (in Ex. 1), aggregate soaked in excess 1.5% (by weight) H₂O₂ water for one week (in Ex. 2), aggregate soaked therein for one week and then washed with water (in Ex. 3), and aggregate soaked in 1.5% ozone water in a sealed vessel for one week (in Ex. 4), respectively.

According to ASTM C 227-81, cement mortar compositions were prepared by blending 1 part by weight of cement, 2.25 parts by weight of the above-mentioned aggregate (0.15 to 4.75 mm in particle sizes) and water, wherein water content was adjusted to be 105 to 120 by a table-flow method, to produce mortar bar test pieces. The resulting mortar bar test pieces (25 X 25 X 285 mm) were demolded and maintained at 37.8 ± 1.7 °C and RH 100% (relative humidity), and changes in length thereof were measured by means of a comparator. The cement used was ordinary portland cement, all alkali content (R₂O) of which was 0.49% by weight as Na₂O (wherein Na₂O: 0.3 part, K₂O: 0.29 part). The R₂O was adjusted to 1.38% by adding thereto reagent-grade NaOH and KOH in the above-mentioned ratios. The results of measuring the changes in length are shown in the following table.

| Changes in Length (%) | | | | | | | |
|---|---|---|---|---|---|---|---|
| Time | 14 days | 1 month | 2 mon. | 3 mon. | 4 mon. | 6 mon. | |
| Ex.1 | +0.066 | +0.292 | - | +0.462 | - | +0.514 | Comp.Ex. |
| Ex.2 | +0.005 | +0.007 | +0.007 | +0.010 | +0.010 | +0.010 | Example |
| Ex.3 | +0.001 | +0.003 | +0.006 | +0.006 | +0.006 | +0.006 | Example |
| Ex.4 | +0.006 | +0.008 | +0.008 | +0.010 | +0.011 | +0.011 | Example |
| (note) Ex. 1: not treated Ex. 2: soaked in 1.5% H₂O₂ water for one week Ex. 3 --- " ---, and then washed with water Ex. 4 soaked in 1.5% ozone water for one week | | | | | | | |

The above-listed results are very clear in view of the evaluation standards "harmless when a mean expansion rate is less than 0.100% in 6 months, and harmful when the rate is not less than 0.100%" of JIS A5308 addendum No.8 (mortar bar method) which is similar to the ASTM standards. Namely, Ex. 1 (comparative) is very harmful, and Ex. 2 to 4 are completely harmless.

### Ex. 5 to 8

One (1) part by weight of a 1:1 mixture of alumina cement and ordinary portland cement was added to and mixed with 2 parts by weight of river sand. In a mortar bowl, 3 parts by weight of the resulting cement composition was placed, and 0.6 part by weight of water (in Ex. 5) or H₂O₂ water (in Ex. 6 & 7) or O₃ water (in Ex. 8) was added thereto, respectively. The blend mixture in the mortar bowl was kneaded with a pestle to determine its viscosity-maintaining time (i.e. a time taken until the viscous kneading became impossible). The results are shown in the following table. Incidentally, no additives for cement were employed in the composition in order to determine the mode of action of the H₂O₂ or O₃.

| | Cement mixture | river sand | water | H₂O₂ or O₃ | viscosity time(approx.) |
|---|---|---|---|---|---|
| Ex.5 (Comp.) | 1 part | 2 pts. | 0.6 part | 0 % | 1 minute |
| Ex.6 (Example) | 1 | 2 | 0.6 | 0.15% | 20 min. |
| Ex.7 (Example) | 1 | 2 | 0.6 | 0.3% | 40 min. |
| Ex.8 (Example) | 1 | 2 | 0.6 | 0.15% | 18 min. |

It has been thus demonstrated that the curing time of the cement materials were effectively retarded due to the presence of H₂O₂ or O₃ in the blending water.

### Ex. 9 to 11

A stoneware tile article having 5% water absorption properties was produced in the following fashion for the ceramic products of the present invention. Namely, 63 % by weight of a mixture of raw talc and porcelain stone and 30 % by weight of a mixture of feldspar and petalite were mixed and ground in a ball mill until particle sizes of the feldspar became as small as about 2 microns, followed by addition of water to make a slurry. The resulting slurry was mixed with 7% by weight of clay slurry. The resulting mixture was dried and ground to give raw material powder. Molded articles (100 X 100 X 5 mm) having a packing ratio of 0.7 were produced by compressing the material powder at a pressing pressure of 300 kgs/square cm. The molded articles were fired for 36 hours to the maximum temperature of 1150 °C to obtain stoneware tile articles. The water absorption after soaking in water for 24 hours was 5 %.

In Ex. 9 & 10 (Examples), the tile articles were soaked in excess 2% H₂O₂ water (Ex. 9) or in sealed 2% ozone water (Ex. 10) for 24 hours, and then washed with flowing water, respectively. In Ex. 11 (Comparative), the tile articles were only washed with flowing water without treatment with H₂O₂ water or O₃ water.

A box-like vessel having about 1 meter more square inside dimensions was placed horizontally. A mortar composition for a bottom layer comprising by weight 1 part of portland cement and 5 parts of sea sand was put in the vessel in 5 cm thickness and sujected to hydration curing. Mortar for bonding comprising portland cement and water was placed thereon in 5 mm thickness. Then, 10 X 10 pieces of the tile articles were bonded thereonto with some joint intervals. In order to promote alkali-silica reactions, the bonded samples were maintained for 3 months in a test room having temperature of 40 °C and relative humidity of 95%. In the Examples 9 and 10, cracks and contamination on the tile surfaces and joint intervals were not detected with the eyes. In the Comparative Example 11, 6 to 10 pieces of circular alkali-silica reaction products (water glass) 0.5 to 2 cm in diameter were found per 1 m X 1 m of the tile surfaces and joint intervals. Incidentally, the above-mentioned circular reaction products came out on the upper and side surfaces of the tile articles, because alkali components of the cement mortar (especially the mortar for the bottom layer) permeated into the tile articles and caused alkali-silica reactions therein.

In mineral substances containing silica components reactive with basic components (e.g. aggregates for cement concrete, silicate ceramics, etc.), the base-silica reactions thereof (especially alkali-silica reactions) are very harmful to durability and contamination of the mineral substances. The problems have remained substantially unsolved. The mode of action to solve the problems according to the present invention has not been fully clarified. It is considered, however, that glass structures which are reaction sites of the silica components in the reactive mineral substances are modified into gel substances, by contacting the mineral substances with H₂O₂ or O₃ in the presence of water, to effectively inhibit the base-silica reactions. For example, the reactive silica components typically contain reaction sites of Ξ Si-O structures. In this case, it is considered that the reactive site structures are modified into prolongedly stable Ξ Si-OH structures by the action of H₂O₂ water or O₃ water and thus the reactivity is satisfactorily inhibited. The present invention, however, should not be bound by such a representative theory.

The mineral substances thus modified and the method for inhibiting the base-silica reactions according to the present invention are very useful for prolonged stabilization of and for preventing contamination of the reactive silica-containing mineral substances coexistent with basic components and especially with alkali components.

## Claims

1. A pre-treated mineral substance selected from molded ceramic products and mineral substances suitable for use as an aggregate for hydraulic cement excluding blast furnace slag, said substance containing a mineral component selected from silica, silicate and mixtures thereof reactive with an alkali metal component, characterized in that said mineral substance has been modified by contact with hydrogen peroxide, ozone or mixtures thereof at a concentration of more than about 0.02% by weight of water, in the presence of water but in the absence of hydraulic cement.

2. The mineral substance according to claim 1, in which the pre-treated mineral substance is a fired silicate ceramic product.

3. The mineral substance according to claim 2, in which the ceramic product is a chinaware product, a stoneware product, or a porcelain product.

4. A cement concrete consisting essentially of cement, aggregate and an amount of water sufficient to effect hydration curing, characterized in that said aggregate consists essentially of a pre-treated mineral substance in accordance with claim 1 prior to mixing the aggregate with the cement.

5. A fired silicate ceramic article bonded onto a substrate with an hydraulic cement, characterized in that said ceramic article is a pre-treated ceramic article in accordance with claim 2.

6. A method for inhibiting a reaction of aggregate with an alkali metal component in a hydraulic cement composition, which comprises allowing hydrogen peroxide, ozone or mixtures thereof at a concentration of more than about 0.02% by weight of water to coexist with water in a blended cement material consisting essentially of a hydraulic cement, a cement-hydrating amount of water, and a mineral aggregate normally reactive with an alkali metal component, with the proviso that said hydraulic cement is not an alumina cement.

7. A method for pretreating a concrete aggregate to inhibit its reaction with an alkaline metal component, wherein hydrogen peroxide, ozone or mixtures thereof at a concentration of more than about 0.02% by weight of water is contacted in the presence of water with said aggregate in a pretreatment step prior to mixing it with hydraulic cement.

8. A method according to claim 6 which further comprises allowing a reducing substance in a smaller quantity than an equivalent amount of hydrogen peroxide or ozone to exist in the blended cement material, in order to control the action of hydrogen peroxide and ozone in the blended cement material.

9. A method for inhibiting a reaction of silica component and/or silicate component with an alkali metal component in a fired silicate ceramic product, which comprises applying a treating amount of hydrogen peroxide water, ozone-containing water, or mixtures thereof at a concentration of more than about 0.02% by weight of water to the exposed portions of the ceramic product.

10. The method according to claim 9, in which the fired silicate ceramic product is selected from a chinaware product, a stoneware product, and a porcelain product.

11. The method according to claim 9, wherein said treating amount of hydrogen peroxide, ozone or mixtures thereof is a soaking or spraying amount.

## Patentansprüche

1. Vorbehandelte Mineralsubstanz gewählt aus geformten Keramikprodukten und Mineralsubstanzen, die geeignet sind zur Verwendung als Zuschlag für hydraulischen Zement, wobei Hochofenschlacke ausgenommen ist, wobei die Substanz einen Mineralbestandteil gewählt aus Siliziumoxid, Silikat und Gemischen daraus enthält, der sich mit einem Alkalimetallbestandteil umsetzen läßt, dadurch gekennzeichnet, daß die Mineralsubstanz durch Inkontaktbringen mit Wasserstoffperoxid, Ozone oder Gemischen daraus in einer Konzentration von mehr als etwa 0,02 Gew.-%, bezogen auf Wasser in Gegenwart von Wasser, aber in Abwesenheit von hydraulischem Zement, modifiziert wurde.

2. Mineralsubstanz nach Anspruch 1, wobei die vorbehandelte Mineralsubstanz ein gebranntes Silikatkeramikerzeugnis ist.

3. Mineralsubstanz nach Anspruch 2, wobei das Keramikerzeugnis ein Porzellanhaushaltswaren-, ein Steingut- oder ein Porzellanerzeugnis ist.

4. Zementbeton bestehend im wesentlichen aus Zement, Zuschlag und einer Wassermenge ausreichend um Härten durch Abbinden zu bewirken, dadurch gekennzeichnet, daß der Zuschlag vor dem Mischen des Zuschlags mit dem Zement im wesentlichen aus einer vorbehandelten Mineralsubstanz nach Anspruch 1 besteht.

5. Gebrannter Silikatkeramikgegenstand, der auf ein Substrat mit hydraulischem Zement befestigt ist, dadurch gekennzeichnet, daß der Keramikgegenstand ein vorbehandelter Keramikgegenstand nach Anspruch 2 ist.

6. Verfahren zum Unterdrücken einer Reaktion des Zuschlags mit einem Alkalimetallbestandteil in einer hydraulischen Zementzusammensetzung, welche die Koexistenz von Wasserstoffperoxid, Ozon oder Gemischen daraus in einer Konzentration von mehr als etwa 0,02 Gew.-%, bezogen auf Wasser, mit Wasser in einem Zementmaterialgemisch ermöglicht, das im wesentlichen aus hyraulischem Zement, einer zementabbindenden Wassermenge und einem mineralischen Zuschlag besteht, der sich normalerweise mit einem Alkalimetallbestandteil umsetzt, unter der Maßgabe, daß der hydraulische Zement kein Aluminiumoxidzement ist.

7. Verfahren zur Vorbehandlung von Zementzuschlag, um dessen Umsetzung mit einem Alkalimetallbestandteil zu unterdrücken, wobei Wasserstoffperoxid, Ozon oder Gemische daraus in einer Konzentration von mehr als etwa 0,02 Gew.-%, bezogen auf Wasser, in Gegenwart von Wasser mit dem Zuschlag in einem Vorbehandlungsschritt vor dem Mischen mit hydraulischem Zement in Kontakt gebracht wird.

8. Verfahren nach Anspruch 6, welches ferner das Vorhandensein einer reduzierenden Substanz in einer kleineren Menge als die Äquivalenzmenge an Wasserstoffperoxid oder Ozon im Zementmaterialgemisch ermöglicht, um die Wirkung von Wasserstoffperoxid oder Ozon im Zementmaterialgemisch zu kontrollieren.

9. Verfahren zum Unterdrücken einer Reaktion von Siliziumoxidbestandteilen und/oder Silikatbestandteilen mit Alkalimetallbestandteilen in einem gebrannten Silikatkeramikerzeugnis, welches das Aufbringen einer Behandlungsmenge von Wasserstoffperoxidwasser, ozonhaltigem Wasser oder Gemischen daraus in einer Konzentration von mehr als etwa 0,02 Gew.-%, bezogen auf Wasser, auf die ausgesetzten Bereiche des Keramikerzeugnisses umfaßt.

10. Verfahren nach Anspruch 9, wobei das gebrannte Silikatkeramikerzeugnis gewählt ist aus einem Porzellanhaushaltswaren-, Steingut- und einem Porzellanerzeugnis.

11. Verfahren nach Anspruch 9, wobei die Behandlungsmenge an Wasserstoffperoxid, Ozon oder Gemischen daraus eine Menge ausreichend zum Tränken oder Aufsprühen ist.

## Revendications

1. Substance minérale prétraitée, sélectionnée parmi des produits céramiques moulés et des substances minérales utilisables comme granulat pour un ciment hydraulique, à l'exclusion du laitier de haut-fourneau, ladite substance contenant un composant minéral sélectionné parmi la silice, le silicate et leurs mélanges réagissant avec un composant de métal alcalin, caractérisée en ce que ladite substance minérale a été modifiée par contact avec du peroxyde d'hydrogène, de l'ozone ou leurs mélanges à une concentration supérieure à environ 0,02 % en poids d'eau, en présence d'eau, mais en l'absence de ciment hydraulique.

2. Substance minérale selon la revendication 1, où la substance minérale prétraitée est un produit céramique en silicate cuit.

3. Substance minérale selon la revendication 2, où le produit céramique est un produit de faïence fine, un produit de grès vitrifié ou un produit de porcelaine.

4. Béton de ciment constitué essentiellement de ciment, de granulat et d'une quantité d'au suffisante pour effectuer sa conservation par hydratation, caractérisé en ce que ledit granulat est constitué essentiellement d'une substance minérale prétraitée selon la revendication 1, avant mélange du granulat avec le ciment.

5. Article céramique en silicate cuit collé sur un substrat au moyen d'un ciment hydraulique, caractérisé en ce que ledit article céramique est un article céramique prétraité selon la revendication 2.

6. Procédé d'inhibition de la réaction de granulat avec un composant de métal alcalin dans une composition de ciment hydraulique, lequel comprend la coexistence de peroxyde d'hydrogène, d'ozone ou leurs mélanges à une concentration supérieure à environ 0,02 % en poids d'eau avec de l'eau dans une matière de ciment mélangé constituée essentiellement d'un ciment hydraulique, d'une quantité d'eau hydratant le ciment et d'un granulat minéral réagissant normalement avec un composant de métal alcalin, à la condition que ledit ciment hydraulique ne soit pas un ciment d'alumine.

7. Procédé de prétraitement d'un granulat de béton dans le but d'inhiber sa réaction avec un composant de métal alcalin, où du peroxyde d'hydrogène, de l'ozone ou leurs mélanges à une concentration supérieure à environ 0,02 % en poids d'eau sont mis en contact en présence d'eau avec ledit granulat au cours d'une étape de prétraitement, avant son mélange avec le ciment hydraulique.

8. Procédé selon la revendication 6, lequel comprend en outre la présence d'une substance réductrice en une quantité inférieure à une quantité équivalente de peroxyde d'hydrogène ou d'ozone dans la matière de ciment mélangé, dans le but de contrôler l'action du peroxyde d'hydrogène et de l'ozone dans la matière de ciment mélangé.

9. Procédé d'inhibition de la réaction d'un composant de silice et/ou d'un composant de silicate avec un composant de métal alcalin dans un produit céramique an silicate cuit, lequel comprend l'application d'une quantité traitante de peroxyde d'hydrogène contenant de l'eau, d'ozone contenant de l'eau ou leurs mélanges à une concentration supérieure à environ 0,02 % en poids d'eau sur les parties exposées du produit céramique.

10. Procédé selon la revendication 9, où le produit céramique en silicate cuit est sélectionné parmi un produit de faïence fine, un produit de grès vitrifié et un produit de porcelaine.

11. Procédé selon la revendication 9, dans lequel ladite quantité traitante de peroxyde d'hydrogène, d'ozone ou de leurs mélanges est une quantité appliquée par imprégnation ou pulvérisation.
